# EUROPEAN PATENT SPECIFICATION

(11) **EP 2 187 373 B1**
(45) Date of publication and mention of the grant of the patent: **26.04.2017**
(21) Application number: 09173819.5
(22) Date of filing: 22.10.2009
(51) Int. Cl.: G09F 1/04, G09F 21/04, G09F 21/06

(54) **Advertising medium for folding trays**
Werbemedium für einen Klapptisch
Support publicitaire pour tablettes repliables

(30) Priority: 12.11.2008 ES 200802338 U
(43) Date of publication of application: 19.05.2010
(73) Proprietor: Binter Canarias, S.A., 35230 Las Palmas de Gran Canaria (ES)
(72) Inventor: Rinaldi, Gian Maria, 35230, Las Palmas De Gran Canaria (ES)
(74) Representative: PROPI, S.L.

(56) References cited:
- CA-A1- 2 284 385
- CN-Y- 201 060 623
- DE-U1- 29 619 710
- US-A1- 2008 066 353

## Description

Advertising medium for folding trays.

### Object of the invention

The present invention relates to an advertising medium according to the features of claim 1, which is applicable to any folding tray, of the type existing on the rear part of airplane, bus and the like seats, such that, it is firmly coupled to a tray side, it can be easily removed and the shape of its sides can be adapted to the content to be advertised, as required.

### Background of the invention

Generally, a large amount of advertising and publicity is found in public transport, as for instance disclosed in US20080066353. Normally, and to a greater extent in airplanes and trains, said advertising is located in the lower pocket of the rear part of the seat; so that it can be hidden behind said pocket without even been seen by the passenger. In this way information cards, magazines, or the like can be found, which at first sight, and as soon as the passenger sits on the seat, do not bring about the desired effect, since these are not seen unless being removed from the tray.

Therefore, in many cases the main objective of the advertisement is not achieved. There should therefore be some device or system for viewing the advertisement in a more efficient and quicker manner, besides drawing the passenger attention at the same moment that takes seat.

Occasionally, said advertisement is located into the cover of the seat headrests, at their rear part, which implies that each time that something is intended to be advertised the entire cover has to be changed, with the associated work and costs that this entails. Sometimes standardized vinyl stickers are used inside airplanes, which have very high production and installation costs. Furthermore, said vinyl can damage the surface to which is applied when it is removed from said surface, with the risk of having to repaint it and incur the additional maintenance costs.

### Description of the invention

The proposed invention satisfactorily solves the previously described problem. This is an advertising medium intended to be placed on all those folding trays found in airplanes, buses, trains and the like, consisting of a piece made of any suitable material, preferably cardboard, so that it fits into one of the tray sides by folding it at a central area intended for this purpose, and which is fastened through a tab arranged at the top of one of the folding sides which is folded and inserted into a hole enabled for this purpose in the opposite flap.

The present invention has the advantage that it can be customised according to the message that one wants to advertise. I.e., the lateral flaps can take any shape as long as these keep the dimensions suitable for being applied to the folding tray, without leaving its outline on the side wherein the medium is applied, and thus avoiding to cover the recess in the vertical fastening area of the tray.

In this way, the invention can take any shape within the tray dimensions, bearing in mind that it has to be folded at the central area and be fastened at the top. Therefore, the description of the invention is not limitative, as it can also be made of any suitable material, dimension, colour, etc.

### Description of the drawing

In order to complete the present description and with the purpose of contributing towards a better understanding of the invention features, a set of drawings, in accordance with a preferred example of embodiment thereof, is attached as an integral part of said description, wherein the following, in an illustrative and not limitative manner, has been represented:

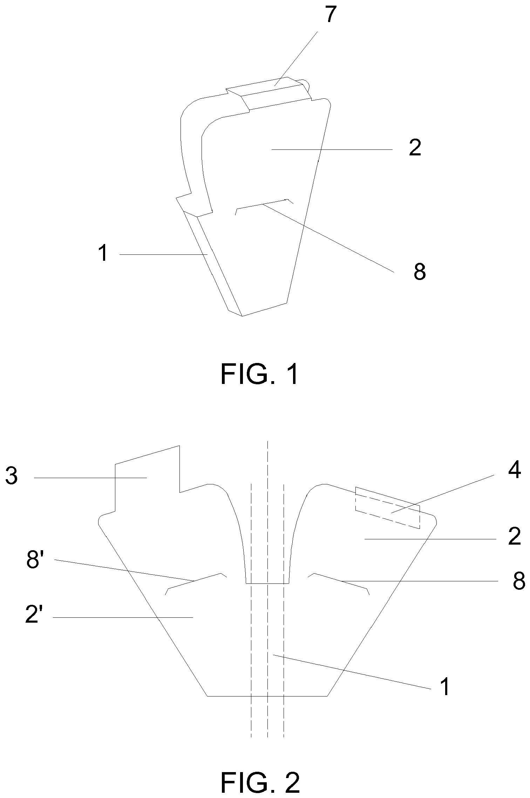

Figure 1.- shows a perspective view of the medium of the invention, in one of its possible preferred embodiments.
Figure 2.- shows the development of the unfolded medium, in another of its possible preferred embodiments different from that of Figure 1, the dotted lines representing the imaginary folding axes of the medium.

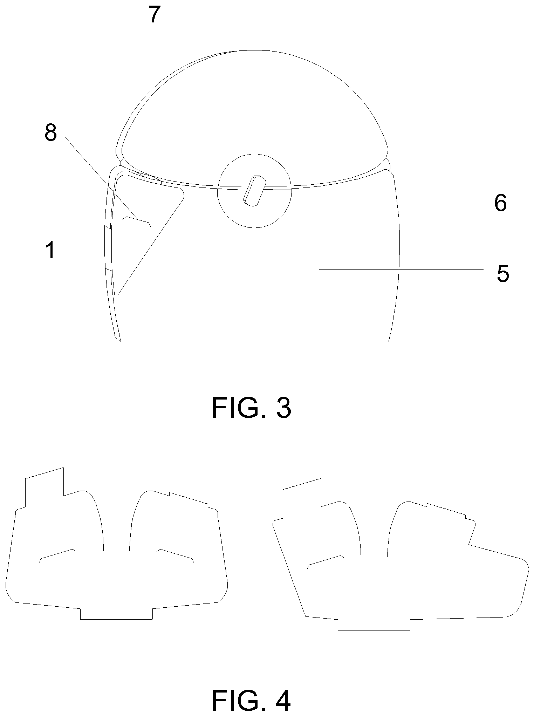

Figure 3.- shows the medium placed on the seat tray in vertical position.
Figure 4.- shows two possible preferred embodiments of the invention, by way of example, so that it can be observed how the medium can acquire any shape at its flaps, as long as these remain inside the tray surface.

### Preferred embodiment of the invention

In light of the figures, it can be seen that the present invention relates to an advertising medium for folding trays, of the type existing on the rear part of airplanes, buses and the like seats. It comprises a central folding area (1), which is adapted to the tray (5) upper edge, with a pair of flaps (2-2') coupled to the front and back of the tray (5) after the folding of the central area (1). The flaps (2-2') are fastened to the tray, through fastening means, in an interlocking manner, being able to be quickly and easily removed, and without leaving any kind of trace on the tray once removed.

In a preferred embodiment of the invention, these fastening means have been materialized in an upper tab (3) arranged on one of the flaps, which is folded in order to pass above the tray upper edge, thus inserting into a hole (4) enabled for this purpose on the opposite flap. This achieves that the device does not slip or fall in any movement of the tray. Furthermore, it does not leave marks or flaws, so that once removed; there is no trace thereof is left on the tray.

The shape of the flaps (2-2') may be modified and adopted any shape at their sides (21-22), as long as these do not protrude from the tray surface. I.e., the medium can be customized according to the advertiser requirements, the content adopting the tray dimension, thus avoiding to cover in any case the recess (6) in the vertical fastening area of the tray.

Furthermore, the medium allows advertisement to be added by both faces thereof, so that a reversible medium is achieved, being able to be utilized in several advertisements.

Therefore, the shape, materials and dimensions of the described medium are not limited by the present invention, as long as it preserves the functionality and the described technical features.

In any of the preferred embodiments of the invention, some openings (8-8') intended for inserting any other related removable advertisement could be added in the area of the flaps.

## Claims

1. Advertising medium for folding trays, of the type existing on the rear part of airplanes, buses and the like seats, **characterized in that** it comprises a central folding area (1), which is adapted to the tray (5) profile, with a pair of flaps (2-2') coupled to the front and back of the tray (5) after the folding of the central area (1), and with fastening means for attaching the flaps (2-2') in an interlocking manner, said fastening means comprising an upper tab (3) arranged on one of the medium flaps, said upper tab being folded in order to pass above the tray (5) upper-edge, and being inserted into a hole (4) provided for this purpose in the opposite flap, so that a unmovable fastening of the device is achieved.

2. Advertising medium for folding trays, according to claim 1, **characterized in that** the sides (21-22) of the flaps (2-2') can adopt any shape or dimension as long as these do not protrude from the tray surface.

3. Advertising medium for folding trays, according to claims 1-2, **characterized in that** it is reversible, so that the advertisement can be placed on both faces of the medium.

4. Advertising medium for folding trays, according to the preceding claims, **characterized in that** in the surface of the flaps are openings (8-8') intended for inserting any other related removable advertisement.

## Patentansprüche

1. Werbemedium für Klapptische, der Art vorhanden auf dem hinteren Teil von Flugzeug-, Bussitzen und ähnlichen Sitzen, **dadurch gekennzeichnet, dass** es einen mittleren Klappbereich (1), welcher dem Profil des Tisches (5) angepasst ist, mit einem Paar von Flügeln (2-2'), welche nach dem Klappen des mittleren Bereichs (1) mit der Vorderseite und der Hinterseite des Tisches (5) gekoppelt sind, und mit Befestigungsmitteln für die Fixierung der Flügel (2-2') in einer ineinandergreifenden Weise umfasst, wobei die genannten Befestigungsmittel einen oberen Flansch (3) umfassen, welcher auf einem der mittleren Flügel angeordnet ist, wobei der genannte obere Flansch geklappt wird, um über den oberen Rand des Tisches (5) hinweg zu gehen, und in ein zu diesem Zweck im entgegengesetzten Flügel versehenes Loch (4) eingeführt wird, so dass eine unbewegliche Befestigung der Vorrichtung erreicht wird.

2. Werbemedium für Klapptische nach Anspruch 1, **dadurch gekennzeichnet, dass** die Seiten (21-22) der Flügel (2-2') jede Form oder Abmessung einnehmen können, solange sie nicht aus der Oberfläche des Tisches herausragen.

3. Werbemedium für Klapptische nach den Ansprüchen 1-2, **dadurch gekennzeichnet, dass** es reversibel ist, so dass die Werbeanzeige auf beiden Flächen des Mediums platziert werden kann.

4. Werbemedium für Klapptische nach den vorhergehenden Ansprüchen, **dadurch gekennzeichnet, dass** es auf der Oberfläche der Flügel Öffnungen (8-8') gibt, welche für die Einführung jeder sonstigen zusammenhängenden abnehmbaren Werbeanzeige bestimmt sind.

## Revendications

1. Support publicitaire pour des panneaux pliants, du type qui existe sur la partie postérieure des sièges d'avions, de bus ou similaires, **caractérisé en ce qu'**il comprend une zone de pliage centrale (1), qui est adaptée au profil du panneau (5), avec une paire de rabats (2-2') couplés à l'avant et à l'arrière du panneau (5) après le pliage de la zone centrale (1), et des moyens de serrage pour fixer les rabats (2-2') par imbrication, lesdits moyens de serrage comprenant une languette supérieure (3) disposée sur l'un des rabats du support, ladite languette supérieure étant pliée afin de passer au-dessus du bord supérieur du panneau (5), et étant insérée dans une rainure (4) prévue à cet effet dans le rabat opposé, de sorte à obtenir un serrage immobile du dispositif.

2. Support publicitaire pour des panneaux pliants, selon la revendication 1, **caractérisé en ce que** les côtés (21-22) des rabats (2-2') peuvent adopter n'importe quelle forme ou dimension à condition qu'ils ne fassent pas saillie sur la surface du panneau.

3. Support publicitaire pour des panneaux pliants, selon les revendications 1-2, **caractérisé en ce qu'**il est réversible, de sorte que la publicité peut être placée sur les deux côtés du support.

4. Support publicitaire pour des panneaux pliants, selon les revendications précédentes, **caractérisé en ce que** dans la surface des rabats il y a des ouvertures (8-8') prévues pour insérer n'importe quelle autre publicité amovible associée.
